# EUROPEAN PATENT APPLICATION

(11) **EP 4 571 462 A1**
(43) Date of publication of application: **18.06.2025**
(21) Application number: 23851366.7
(22) Date of filing: 13.06.2023
(51) Int. Cl.: G06F 1/3293

(54) **SWITCHING METHOD, SWITCHING APPARATUS, ELECTRONIC DEVICE, AND COMPUTER-READABLE STORAGE MEDIUM**

(30) Priority: 10.08.2022 CN 202210957925
(71) Applicant: GUANGDONG OPPO MOBILE TELECOMMUNICATIONS CORP., LTD., Dongguan, Guangdong 523860 (CN)
(72) Inventor: LI, Zhiwen, Dongguan, Guangdong 523860 (CN); TAO, Hua, Dongguan, Guangdong 523860 (CN)
(74) Representative: Novagraaf Technologies
(86) International application number: PCT/CN2023/099990
(87) International publication number: WO 2024/032138

(57) **Abstract**

Embodiments of the present application disclose a switching method, a switching apparatus, an electronic device, and a computer-readable storage medium. The electronic device is provided with at least a first processor and a second processor. The method comprises: if a screen-on switching condition is met, the first processor generates switching instruction information, wherein the switching instruction information is used for instructing the first processor to keep displaying a first interface picture during a screen-off process, and the first interface picture is a picture of the last frame before the screen-off process in a first application corresponding to the first processor which is currently being displayed; the first processor implements the screen-off process in a screen-on state according to the switching instruction information, in response to a condition in which the screen-off process is completed, the first processor sends a screen switching message to the second processor; and according to the screen switching message, the second processor determines to obtain screen control permission and display a second interface picture of a second application, the second application being an application corresponding to the second processor, and a function of the second application being consistent with that of the first application.

## Description

### CROSS-REFERENCE TO RELATED APPLICATIONS

The present application claims priority to Chinese Patent Application No. 202210957925.X, filed August 10, 2022, the contents of which are incorporated herein in its entireties.

### TECHNICAL FIELD

The present disclosure relates to the field of display technologies, and in particular to a switching method, a switching apparatus, an electronic device, and a computer-readable storage medium.

### BACKGROUND

With the continuous development of science and technology, more and more electronic devices with different functions emerge at the historic moment, which brings many conveniences to a user's daily life.

In the related art, taking a wearable device as an example, the wearable device can be equipped with multiple different operating systems simultaneously. The different operating systems can be configured to perform different tasks, thereby improving the computational processing capability of the electronic device.

### SUMMARY OF THE PRESENT DISCLOSURE

Some embodiments of the present disclosure aim to provide a switching method, a switching apparatus, an electronic device, and a computer-readable storage medium, such that power consumption of the device may be reduced and the battery life of the device may be improved.

The technical solution of the present disclosure is implemented as follows.

Some embodiments of the present disclosure provide a switching method, applied to an electronic device. The electronic device is arranged with at least a first processor and a second processor. The switching method includes: generating, by the first processor, switching indication information in a case where a screen-on switching condition is satisfied, where the switching indication information is configured to instruct the first processor to keep displaying a first interface image during the execution of a screen-off process, and the first interface image is a last-frame image of a first application corresponding to the first processor that is being displayed before the screen-off process; implementing, by the first processor, the screen-off process under a screen-on state according to the switching indication information; sending, by the first processor, a screen switching message to the second processor in a case where the screen-off process is completed; determining, by the second processor, to obtain screen control authority and displaying a second interface image of a second application, according to the screen switching message, where the second application is an application corresponding to the second processor, and a functionality of the second application is consistent with that of the first application.

Some embodiments of the present disclosure provide a switching apparatus. The switching apparatus includes: a generating module, configured to generate switching indication information through a first processor, in a case where a screen-on switching condition is satisfied, where the switching indication information is configured to instruct the first processor to keep displaying a first interface image during the execution of a screen-off process, and the first interface image is a last-frame image of a first application corresponding to the first processor that is being displayed before the screen-off process; a screen-off module, configured to implement the screen-off process under a screen-on state through the first processor, according to the switching indication information; a sending module, configured to send a screen switching message to a second processor through the first processor, in a case where the screen-off process is completed; a determining module, configured to determine to obtain screen control authority through the second processor, according to the screen switching message; and a display module, configured to display a second interface image of a second application, where the second application is an application corresponding to the second processor, and a functionality of the second application is consistent with that of the first application.

Some embodiments of the present disclosure further provide an electronic device, including: a first processor, a second processor, a memory, and a display. The memory stores executable instructions. The first processor and the second processor are configured to execute the executable instructions stored in the memory to perform the switching method. The display is configured to perform screen display.

Some embodiments of the present disclosure provide a computer-readable storage medium storing executable instructions. In a case where the executable instructions are executed by a first processor and a second processor, the first processor and the second processor are caused to perform the aforementioned switching method.

Some embodiments of the present disclosure provide a computer program product, including a computer program or instructions. In a case where the computer program or the instructions are executed by a first processor and a second processor, the first processor and the second processor are caused to perform the switching method provided by some embodiments of the present disclosure.

The embodiments of the present disclosure provide a switching method, a switching apparatus, an electronic device, and a computer-readable storage medium. For the electronic device supporting dual-core dual-system, in a case where a screen-on switching condition is satisfied, the electronic device generates switching indication information through a first processor, and keeps a first application, which is being run, displaying a first interface image during a screen-off process. In this way, it may be possible to achieve a switching to display a second application interface by a second application running on the second processor under a screen-off state, thereby completing a seamless switching of the device in the background. In a condition of ensuring a display function of the electronic device to normal operate, since power consumption of the first processor is higher than that of the second processor, when the second interface screen is displayed through the second processor, it may also be possible to reduce an occurrence of high operating power consumption of the electronic device due to a case that the first processor keeps in a working state for an extended period. Therefore, power consumption of the electronic device may be reduced, and the battery life of the electronic device may be improved.

### BRIEF DESCRIPTION OF THE DRAWINGS

FIG. 1 is a flowchart of a switching method according to some embodiments of the present disclosure.
FIG. 2 is a schematic diagram of a software and hardware architecture of an exemplary electronic device according to some embodiments of the present disclosure.
FIG. 3 is a schematic diagram of a partial software and hardware architecture of an exemplary electronic device according to some embodiments of the present disclosure.
FIG. 4 is a flowchart of a switching method according to some embodiments of the present disclosure.
FIG. 5 is a flowchart of a switching method according to some embodiments of the present disclosure.

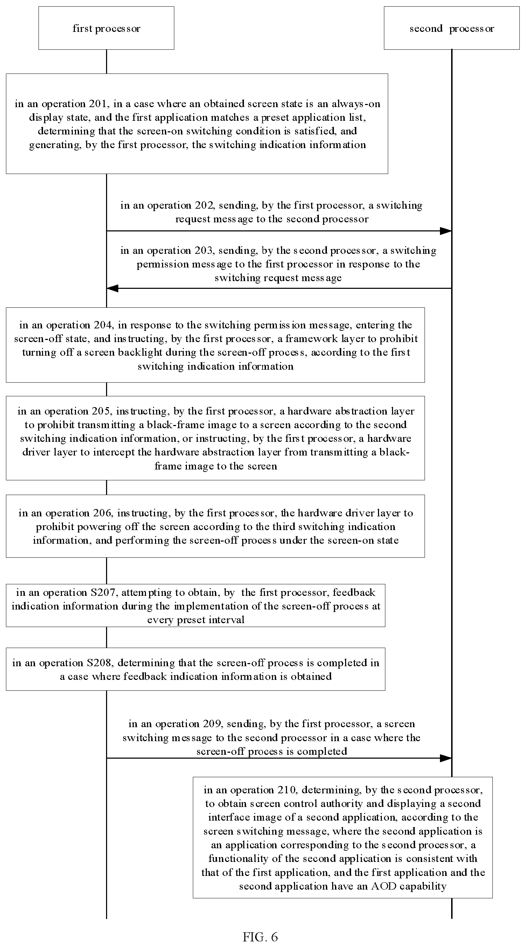

FIG. 6 is a flowchart of a switching method according to some embodiments of the present disclosure.
FIG. 7 is a schematic diagram of an exemplary interface display according to some embodiments of the present disclosure.
FIG. 8 is a structural diagram of a switching apparatus according to some embodiments of the present disclosure.
FIG. 9 is a structural diagram of an electronic device according to some embodiments of the present disclosure.

### DETAILED DESCRIPTION

In order to make the purpose, technical solutions, and advantages of the present disclosure clearer, the present disclosure is described in further detail below with reference to the accompanying drawings. The embodiments described herein should not be intended to limit the present disclosure. All some embodiments obtained by those skilled in the art without making creative efforts shall fall within the scope of the present disclosure.

In the following description, reference is made to "some embodiments" which describe a subset of all possible embodiments. However, it should be understood that "some embodiments" may be the same subset or different subsets of all possible embodiments and may be combined with each other without conflict.

In the following description, terms "first/second/third" as used in embodiments of the present disclosure merely distinguish similar objects and do not imply a particular order for the objects. It should be understood that the terms "first/second/third" may be interchanged in a particular sequence or order, where permitted, be interchanged in a particular order or sequence, so that the embodiments of the present disclosure described herein can be implemented in an order other than that illustrated or described herein.

Unless otherwise defined, all technical and scientific terms used herein have the same meanings as commonly understood by those skilled in the art to which the present disclosure belongs. The terms used herein are only intended to illustrate the purpose of the embodiments of the present disclosure and are not intended to limit the present disclosure.

Before further describing the embodiments of the present disclosure, a term and a terminology involved in the embodiments of the present disclosure may be described below.
1) Dual system: based on a hardware architecture with two processor chips, each processor runs an independent operating system. A large core, i.e., a first processor, runs an Android system. A small core, i.e., a second processor, runs a real time operating system (RTOS). The two systems interact with each other to complete a function of a hardware terminal.
2) MCU: microcontroller unit, i.e., a single-chip microcomputer, is configured to run the RTOS of the small core. The chip is characterized by extremely low power consumption.
3) AOD: always-on display, i.e., displaying on a screen all the time/continuously, which is also known as screen-off display, that is, a function in which the screen may continue to display an image even after the system (e.g., a central processing unit (CPU)) is in a sleep state. When the electronic device is in anAOD mode, a brightness and a refresh rate of the screen are reduced, and the entire system is in the sleep state. Only when the data on an interface needs to be updated, the system is woken up to draw new interface data to be displayed on the screen. The AOD mode is a continuous screen-on mode with low power consumption. In the AOD mode, the screen may be always/continuously on, so as to facilitate a user to easily check time, steps, navigation, and other data at any time, and power consumption may be saved compared to a normal continuous screen-on mode.

The electronic device provided in the embodiments of the present disclosure may be a terminal with dual system, such as a computer, a tablet, a smartphone, a wearable device like a smartwatch, etc., which is not limited herein.

With the increasing use of the electronic device, the electronic device supporting the dual system may achieve a display function. Taking the electronic device being the smartwatch among the wearable device as an example, when the dual-system cooperates to perform display functions, a scenario with a gorgeous interface may be handled by the large-core system (i.e., the first system), and a standby scenario may be processed by the small-core system (i.e., the second system). Two systems, i.e., the large-core system and the small-core system, work together, intelligently switching to achieve long battery life for the smartwatch. The switching between the two systems usually occurs after the large-core system enters a screen-off state and keeps a standby state for a period, and is switched to the small-core system at this time, so as to allow switching imperceptibly. However, in some scenarios, the large-core system is not in the screen-off state, but keeps in a continuously screen-on standby state, such as the AOD state/scenario. Therefore, when the electronic device is in the screen-on mode, the screen remains continuously screen-on. In this scenario, in a condition that the large-core system attempts to switch to the small-core system to extend battery life, it may be difficult to prevent the user from noticing due to a case that the entire large-core system needs to complete the screen-off process before switching to the small-core system. Otherwise, after the screen is taken over by the small-core system, the large-core system may continue to refresh interface data, resulting in a system abnormality. However, when the large-core system performs the screen-off process, the screen inevitably turns off, which causes the screen which is originally always on to become black. Therefore, the large-core system does not switch to the small-core system when the screen is on, resulting in the large-core system keeping in the screen-on standby state, increasing power consumption, and reducing the battery life of the electronic device.

The embodiments of the present disclosure provide a technical solution for switching from the large-core system to the small-core system when the screen is on. During the screen-off process of the large-core system, the screen keeps continuously on without turning off and displays a last-frame image before the screen-off process, so as to allow switching to the small-core system imperceptibly, thereby reducing the power consumption of the electronic device and improving the battery life of the electronic device.

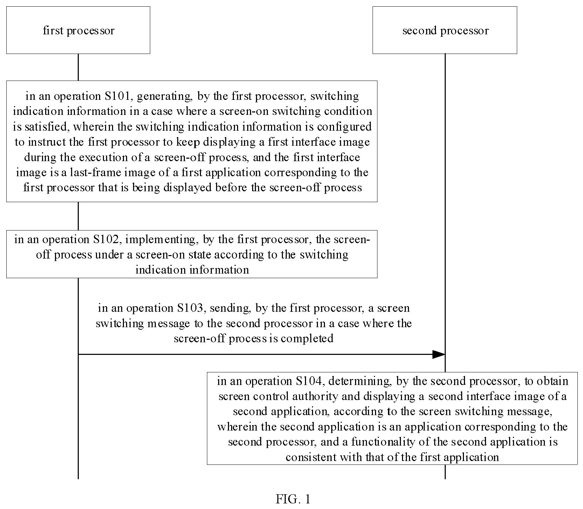

Some embodiments of the present disclosure provide a switching method, applied to an electronic device. The electronic device is arranged with at least a first processor and a second processor. As shown in FIG. 1, the method includes the following operations.

In an operation S101, in a case where a screen-on switching condition is satisfied, switching indication information is generated by the first processor. The switching indication information is configured to instruct the first processor to keep displaying a first interface image during the execution of a screen-off process. The first interface screen is a last-frame image of a first application corresponding to the first processor that is being displayed before the screen-off process.

In the embodiments, the electronic device is arranged with at least the first processor and the second processor which have different power consumption. The first processor is configured to run a first system, and the second processor is configured to run a second system (i.e., a dual-core dual-system). The power consumption of the first processor is higher than the power consumption of the second processor, that is, the power consumption of the first system is higher than the power consumption of the second system.

It should be understood that in some embodiments of the present disclosure, the first processor and the second processor work asynchronously, and the first system and the second system need to realize system communication (or referred to as dual-core communication). In a possible application scenario, the first system is an Android operating system running on the CPU, and the second system is the RTOS running on the MCU.

In some embodiments, taking the electronic device being a smartwatch as an example, the first processor is the CPU, the second processor is the MCU, the first system is the Android system, and the second system is the RTOS. Accordingly, an event that may be processed by the first system includes a scenario with high requirements for processing performance or a scenario with strong interaction, such as answering incoming calls, replying to messages, setting functions, etc. An event that may be processed by the second system includes a scenario with low requirements for processing performance or a scenario with weak interaction, such as time display, notification message display, etc.

It should be understood that the first system may be capable of processing an event processed by the second system, while the second system may not be able to process the event processed by the first system. That is, a performance of the first processor is higher than a performance of the second processor.

In some embodiments of the present disclosure, the electronic device may be arranged with a single processor. The first system and the second system are respectively run by different cores of the processor. A processing performance of a core running the first system is higher than a processing performance of a core running the second system, which is not limited herein.

In the embodiments of the present disclosure, when the first application is being displayed on the electronic device, in a case where the screen-on switching condition is satisfied, the switching indication information is generated by the first processor. The switching indication information here is configured to instruct the first processor to keep displaying a first interface image during the execution of the screen-off process. The first interface screen is a last-frame image of a first application corresponding to the first processor that is being displayed before the screen-off process.

The electronic device continuously/constantly refreshes an interface layer image through an application layer and transmits the interface layer image to the screen for display. In a case where it is detected that the screen switching condition is satisfied, the switching indication information is generated by the first processor. The switching indication information is configured to instruct a software layer to perform the screen-off process of the first processor during a subsequent screen-off process of the first processor, a hardware layer keeps the screen on to display the last-frame image of the first application before the screen-off process, and the screen-off process under/in a screen-on state is completed.

It should be understood that a purpose of the screen-off process of the first processor is to release screen control authority of the first processor and transfer the screen control authority to the second processor to control the screen.

In the embodiments of the present disclosure, the switching indication information is set or generated by the first processor before executing the screen-off process, and the screen-off process has not yet started at this time.

In the embodiments of the present disclosure, in a scenario where the electronic device is under the screen-on state for the first application running in the first system by the first processor, switching is performed between the first system and the second system under the screen-on state, and the second application may be run by the second system, in a case where it is detected that the screen-on switching condition is satisfied. In this way, it may be possible to switch between different systems in a background without a black image on the screen, thereby completing display work with low power consumption.

In the embodiments of the present disclosure, the switching method provided by the embodiments of the present disclosure is applicable to a scenario where a foreground operation is controlled by the first processor (i.e., the first system), such as a display scenario triggered by an application running under the screen-on state, or a display scenario triggered by an application running under/in the AOD state, i.e., a scenario under the AOD state.

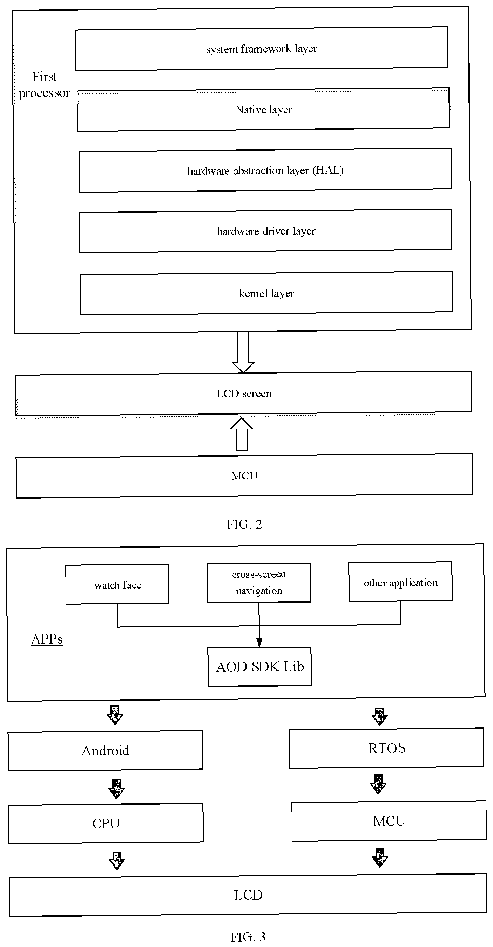

In some embodiments, as shown in FIG. 2, FIG. 2 is a schematic diagram of a software and hardware architecture of the first processor, the MCU, and a Liquid Crystal Display (LCD) module in the electronic device according to some embodiments of the present disclosure. The LCD module is the screen of the electronic device, and is configured to display a graphical user interface and/or receive a user interaction operation.

The first processor supports the first system, i.e., the Android system. An architecture layer of the first system includes: a system framework layer (Framework), a native layer (Native), a hardware abstraction layer (HAL), a hardware driver layer, and a kernel layer (Kernel).

The system framework layer may obtain an image or data of the interface layer from the application layer and transmit the image or the data layer by layer until the image or the data is displayed on the LCD.

In some embodiments of the present disclosure, in a case where the screen-on switching condition is satisfied, first switching indication information, second switching indication information, and third switching indication information are at least generated by the first processor. The first switching indication information is configured to instruct to prohibit turning off a screen backlight during the screen-off process. The second switching indication information is configured to instruct to prohibit transmitting a black-frame image to a screen during the screen-off process. The third switching indication information is configured to instruct to prohibit powering off the screen during the screen-off process.

In the embodiments of the present disclosure, in a case where the screen-on switching condition is satisfied, the first switching indication information is set by the system framework layer, and the system framework layer is informed to prohibit turning off the screen backlight during the screen-off process. The second switching indication information is set by the hardware abstraction layer or the hardware driver layer, and the hardware abstraction layer or the hardware driver layer is informed to prohibit transmitting the black-frame to the screen during the screen-off process. The third switching indication information is set by the hardware driver layer, and the hardware driver layer is informed to prohibit powering off the screen during the screen-off process.

In the embodiments of the present disclosure, since transmitting the black-frame image to the screen during the screen-off process is a function performed in the hardware abstraction layer, the second switching indication information may be set in the hardware abstraction layer, so as to prohibit the hardware abstraction layer from transmitting the black-frame image. Alternatively, when the black-frame image is transmitted to the hardware driver layer by the hardware abstraction layer, the hardware driver layer may intercept the transmitted black-frame image and the black-frame image is not transmitted to the LCD, thereby prohibiting transmitting the black-frame image to the screen during the screen-off process, which is not limited herein.

In the embodiments of the present disclosure, the electronic device needs to prepare some information before the screen-off process, such that different architecture layers may inform/know a function that may be completed/performed, or a function that may be prohibited during the execution of the screen-off process while keeping the display. Accordingly, it may be possible to allow the different architecture layers to perform or skip the aforementioned operation when the screen-off process is performed.

In some embodiments, during a normal screen-off process, the system framework layer may turn off the screen backlight. Since the backlight level is set to 0, the screen brightness may become black, and the screen flickers with a black image when the screen control authority is switched from the first processor to the second processor, failing to achieve the seamless screen-on switching effect and leading to a poor user experience. Therefore, the system framework layer is informed not to issue an instruction to set the backlight level of the screen to 0 (i.e., first switching indication information), i.e., skipping performing a code for setting the backlight level to 0.

It should be understood that in a case where the hardware abstraction layer may transmit the black-frame image to the screen during the screen-off process to facilitate a quick screen-off, the screen flickers with the black image during a process where the screen control authority is switched from the first processor to the second processor, failing to achieve the seamless screen-on switching effect. Therefore, the hardware abstraction layer is informed not to refresh a pure black-frame to the screen, or a screen driver layer in the hardware abstraction layer is informed to intercept a pure black-frame image generated by the hardware abstraction layer during the screen-off process. Additionally, in order to keep the screen on, the screen driver layer in the hardware abstraction layer is informed not to power off the screen and continue to supplying power to the screen, thereby achieving system switching and display switching under the screen-on state.

In the embodiments of the present disclosure, as shown in FIG. 3, FIG. 3 is a schematic diagram of the software and hardware architecture of an exemplary electronic device according to some embodiments of the present disclosure. The electronic device mainly includes four modules, including an application layer (APPs), a first processor (corresponding to the first system, i.e., the Android system), the MCU (corresponding to the second system, i.e., the RTOS), and the screen (i.e., the LCD).

In some embodiments of the present disclosure, the application layer is a collection of applications installed and running on the electronic device. For example, in an AOD scenario, the applications include a watch face, a cross-screen navigation, a music player, a notification bar, and other AOD SDK Lib (an application software development kit) that supports AOD display. That is, all applications in the APPs module have AOD capabilities, and the interfaces in the applications have two states, i.e., a normal interface and an AOD interface.

In some embodiments of the present disclosure, in addition to generating the first switching indication information, the second switching indication information, and the third switching indication information, the first processor may further generate fourth switching indication information. The fourth switching indication information is configured to instruct the system framework layer to intercept the interface layer image transmitted by the application layer.

In the embodiments of the present disclosure, in addition to the aforementioned switching indication messages, the first processor may further generate the fourth switching indication information. In this way, before the system framework layer is informed to perform the screen-off process, a process (such as SurfaceFlinger) is notified to intercept a subsequent request from the application layer to refresh the interface layer, thereby achieving the purpose of intercepting the interface layer image transmitted by the application layer on the system framework layer.

In the embodiments of the present disclosure, the fourth switching indication information may be generated or may not be generated, which is not limited herein.

In some embodiments, the fourth switching indication information is the first to be used as a basis for instructing interception during the execution of the screen-off process. The first switching indication information to the third switching indication information are used as a basis for instructing the prohibition of respective functions thereof during the execution of the screen-off process in corresponding architecture layers thereof.

In the embodiments of the present disclosure, forms of setting switching indication information in the different architecture layers may be different from each other, for example, in a form of flag bits, attribute information, file nodes, or the like, which are not limited herein.

In some embodiments, the screen-on switching condition is satisfied, a flag (i.e., the first switching indication information) is set in the system framework layer, attribute information (i.e., the second switching indication information) is set in the hardware abstraction layer or the hardware driver layer, and a file node (i.e., the third switching indication information) is set in the hardware driver layer.

In an operation S102, according to the switching indication information, the screen-off process under the screen-on state is implemented by the first processor.

In the embodiments of the present disclosure, when the electronic device determines that the screen-on switching may be performed, the screen-off process may be triggered. According to each piece of the switching indication information that has been set or generated, the first processor may sequentially perform the screen-off process on different modules or different architecture layers corresponding to the first system, and processing operations and functions of each module or each architecture layer during the execution of the screen-off process are different.

In the embodiments of the present disclosure, when the electronic device performs the screen-off process, the execution sequence is as follow: the system framework layer-the native layer-the hardware abstraction layer-the hardware driver layer-the kernel layer. The first processor first implements the screen-off in the system framework layer according to the first switching indication information. The screen-off process is performed in the native layer, and the screen-off is implemented in the hardware abstraction layer or in the hardware driver layer according to the second switching indication information. The screen-off is implemented in the hardware driver layer according to the third switching indication information, and finally the screen-off is implemented in the kernel layer until the screen-off process is completed.

In the embodiments of the present disclosure, when the switching indication information includes the first switching indication information, the second switching indication information, and the third switching indication information, during the screen-off process, the first processor is configured to instruct the framework layer to prohibit turning off the screen backlight according to the first switching indication information. The screen-off process may continue to be performed in the native layer, and the first processor is configured to instruct the hardware abstraction layer to prohibit transmitting the black-frame image to the screen according to the second switching indication information, or the first processor is configured to instruct the hardware driver layer to intercept the hardware abstraction layer from transmitting a black-frame image to the screen. The first processor is configured to instruct the hardware driver layer to prohibit powering off the screen according to the third switching indication information, and the screen-off process may be finally implemented in the kernel layer, so as to perform the screen-off process under the screen-on state.

In some embodiments of the present disclosure, when the switching indication information further includes the fourth switching indication information, during the screen-off process, before the first processor is configured to instruct the framework layer to prohibit turning off the screen backlight according to the first switching indication information, the first processor is configured to instruct the system framework layer to intercept the interface layer image transmitted by the application layer according to the fourth switching indication information.

In the embodiments of the present disclosure, when the fourth switching indication information is generated or set in the first processor, the first processor may first intercept the interface layer image transmitted by the application layer based on the fourth switching indication information when performing the screen-off process. In this way, it may be possible to ensure that, when a subsequent screen-off process is performed, there may be no refreshed interface data or content from the application layer being transmitted to the LCD, thereby reducing a display abnormality and confusion.

It may be understood that by setting different switching indication information for the different architecture layers, the first processor may achieve the following functions, such as prohibiting turning off the screen backlight, prohibiting transmitting the black-frame image to the screen, and prohibiting powering off the screen during the screen-off process, so as to ensure the screen-on switching and the seamless display effect without the black image. In addition, it may be possible to enable the switching operation of the low-power processor, thereby reducing the power consumption of the electronic device and improving the battery life of the electronic device.

It may be understood that the first processor may set a specific flag bit, a specific identifier, or a specific file node for the different architecture layers of the first system. Each of the different architecture layers reads or identifies/recognizes corresponding flag bit information to perform a specific operation, so as to complete the screen-off operation in a state where the screen keeps on to display the last-frame image of the first application.

In an operation S103, in a case where the screen-off process is completed, a screen switching message is sent to the second processor by the first processor.

In the embodiments of the present disclosure, the first processor performs the screen-off process, and in a condition that the screen-off process is completed, it is indicated that the first processor has completed the screen-off and may switch with the second processor. At this time, the first processor sends a screen switching message to the second processor, so as to notify the second processor to start the switching.

In the embodiments of the present disclosure, an operation that the screen switching message is sent to the second processor by the first processor is performed in the following way: in a case where the screen-off process is completed, the kernel layer of the first processor releases the screen control authority, sends the screen switching message to the second processor through a bus or through a dual-core node method, and informs the second processor to take over the screen control authority.

In an operation S104, the second processor determines to obtain the screen control authority and displays a second interface image of the second application, according to the screen switching message. The second application is an application corresponding to the second processor, and a functionality of the second application is consistent with that of the first application.

In some embodiments of the present disclosure, in order to ensure the smoothness and continuity of the screen display or content while retaining the screen-on state during system switching, the functionality of the second application is consistent with that of the first application. In this way, it may be possible to achieve the effect that display images before and after the switching are basically the same, so as to allow the user to be unaware of the switching and changes, thereby improving the display effect of the switching.

In the embodiments of the present disclosure, the second application and the first application are applications installed on the second system and the first system respectively, and the second system and the first system have at least the same functionality. In some embodiments, the second application and the first application are the same application installed on the second system and the first system respectively. For example, the first application may be a social application, and the second application is also the same social application, while the first application and the second application run on different systems, respectively.

In some embodiments of the present disclosure, when the electronic device determines whether the screen-on switching condition is satisfied, the electronic device needs to determine whether there is a second application, which matches the first application, in a preset application list corresponding to the second processor. A case where the first application matches the second application in the preset application list is satisfied with the premise for system switching. Otherwise, when the switching is performed between the first system and the second system, there may be a situation where the application displayed on the screen jumps in a case where the second processor does not support the second application that matches the first application, which does not comply with a usage principle, and the display image is neither smooth nor continuous/coherent, resulting in abnormalities. In order to prevent the display jump, it is necessary to find a second application that matches the first application from the preset application list, which may be served as a premise for meeting the screen-on switching condition.

In the embodiments of the present disclosure, an AOD function on the electronic device has become a universal function. The AOD function may allow the system to display some data on the screen in a low-power manner when the system is in a sleep mode. Taking the wearable device as an example, after the wearable device is bound to a smartphone, when the user needs to check the time or map navigation data, it is not necessary to frequently raise the wrist to turn on the screen to check, and required data may be seen by lowering the head. In this way, the user experience may be greatly improved, and at the same time, it may effectively increase the aesthetics of the screen display of the wearable device.

For the AOD scenario, a case where the screen-on switching condition is satisfied may be as follows. An obtained screen state is the AOD state, and the first application matches the preset application list. The preset application list represents a list of applications that are allowed to run on the second processor.

In some embodiments of the present disclosure, a scenario in which the switching indication information may be generated by the first processor may be as follows. In a case where the obtained screen state is the AOD state, and the first application matches the preset application list, it is determined that the screen-on switching condition is satisfied, and the switching indication information may be generated by the first processor.

In the embodiments of the present disclosure, the preset application list is a list of applications that are supported to run on the second processor and may implement application functions in the second system, and may also be understood as an application whitelist corresponding to the second system.

In some embodiments of the present disclosure, in the AOD scenario, the preset application list includes an application identifier of a common application in the first system that has the AOD function and has an application in the second system that supports transferring of the AOD state.

In the embodiments of the present disclosure, the preset application list may be preset and stored in storage space corresponding to the first system, or may be determined to obtain the application identifier of the common application based on a historical AOD record. The historical AOD record is stored in the storage space corresponding to the first system. After the AOD state switching is performed between the first system and the second system every time, the first system may obtain the historical AOD record through the second system, so as to update an application which is stored in the storage space and has undergone historical AOD state switching.

In the embodiments of the present disclosure, under the AOD state, the first application matches the preset application list, that is, based on the first application, the first processor may identify that the preset application list includes the identifier of the first application, or there is an application identifier that matches the first application, it is determined that the screen-on switching condition is satisfied, and the first processor may generate the switching indication information, so as to perform the subsequent switching process.

In some embodiments, by querying the preset application list of the first application, the first system determines that the first application is a common application in the second system that has an application that supports transferring of display state in a case where the preset application list includes the application identifier of the first application, and the second application and the first application support transferring of the display state. In the AOD scenario, the preset application list is stored in the first system in a case where the preset application list includes the application identifier of the first application.

In the embodiments of the present disclosure, a matching relationship between the common application and the second application may be kept and updated. The first system is informed the installation and/or uninstallation of new applications in the second system, and updates the application identifier of an installed application stored in the preset application list. The application identifiers may include an application icon, an application name, an application package name, etc., which is not limit herein.

In the embodiments of the present disclosure, for a display scenario where an application is triggered to run under the screen-on state, for example: when the first processor is running, in a case where the screen is under the screen-on state, it may be possible to directly and imperceptibly switch to a scenario of the second application corresponding to the second system when the user clicks on an application icon on a desktop. A case where the screen-on switching condition is satisfied may be as follows. The obtained screen state is the screen-on state, a startup instruction of the first application is received, and the first application matches the preset application list. The preset application list represents a list of applications that are allowed to run on the second processor.

In some embodiments of the present disclosure, the scenario in which the switching indication information may be generated by the first processor may be as follows. In a case where the obtained screen state is the screen-on state, the startup instruction of the first application is received, the first application matches the preset application list, it is determined that the screen-on switching condition is satisfied, and in response to the startup instruction, the switching indication information may be generated by the first processor.

In the embodiments of the present disclosure, when the screen switching message is received by the second processor, in response to the screen switching message, the second processor determines to obtain the screen control authority and obtains the second interface image of the second application, and displays the second interface image of the second application on the screen, where the second application is an application corresponding to the second processor, and a functionality of the second application is consistent with that of the first application.

In some embodiments of the present disclosure, in response to the screen switching message, the second processor powers on the screen and determines to obtain the screen control authority. The screen control authority is configured to allow the screen to display the second interface image corresponding to the second processor. The second processor obtains the second interface image of the second application. The second interface image is directly displayed on the screen.

In the embodiments of the present disclosure, when the first processor completes the screen-off process, the screen control authority is released by the first processor and is handed over to the second processor to control. The first processor still powers on the screen without powering off at this time, however, after the second processor takes over, the second processor needs to supply power to the screen. Therefore, in response to the screen switching message, the second processor powers on the screen and determines to obtain the screen control authority. After the second processor determines that the screen control authority is obtained, the second processor may provide display content for the screen. That is, the second processor obtains the second interface image of the second application that has the same functionality as the first application displayed previously, and continues to directly display the second interface image on the screen, instead of refreshing the page, thereby achieving coherent display of the image and improving the smoothness and coherence of the display.

In some embodiments of the present disclosure, when the display switching caused by the system switching is performed under the screen-on state, instead of performing a reset way/operation (i.e., not performing a Reset operation on the screen), the second interface screen that is continuous or synchronized with a display image of the first interface is directly linked/connected and displayed by appending data. In this way, it may be possible to realize a process of seamlessly switching from the first system to the second system under the screen-on state, so as to reduce an occurrence of the display effect of flickering with the black image when the first processor turns off the screen during the switching process, thereby improving the smoothness and stability of the display.

In the embodiments of the present disclosure, the first processor sends a state synchronization message to the second processor through the dual-core communication. The state synchronization message may include display content synchronization information (content of the same application), image display color parameter information, image display position information, etc., which is not limited herein. Based on the state synchronization message, the second processor draws the second interface image through the second application, and compared with the first interface image of the first application, the image display content, such as font, a font size, an application icon size, an application icon view, etc., and an image display parameter are the same as those of the second interface image. Therefore, the second interface image obtained by the second processor may be the synchronized display content, so as to ensure the correctness and timeliness of the display content.

In some embodiments, the second interface image of the second application and the first interface image of the first application are interfaces of the same function. The interface display content may be completely the same or not completely the same.

It may be understood that for the electronic device supporting the dual-core dual-system, in a case where a screen-on switching condition is satisfied, the electronic device generates switching indication information through a first processor, and keeps a first application, which is being run, displaying a first interface image during a screen-off process. In this way, it may be possible to achieve a switching to display a second application interface by a second application running on the second processor under a screen-off state, thereby completing a seamless switching of the device in the background. In a condition of ensuring a display function of the electronic device to normal operate, since power consumption of the first processor is higher than that of the second processor, when the second interface screen is displayed through the second processor, it may also be possible to reduce an occurrence of high operating power consumption of the electronic device due to a case that the first processor keeps in a working state for an extended period. Therefore, power consumption of the electronic device may be reduced, and the battery life of the electronic device may be improved.

In some embodiments of the present disclosure, in a case where the screen-on switching condition is satisfied, a switching request message is sent to the second processor by the first processor. In response to the switching request message, a switching permission message is sent to the first processor by the second processor. In response to the switching permission message, the switching indication information is generated by the first processor.

In some embodiments of the present disclosure, in a case where the screen-on switching condition is satisfied, after the switching indication information is generated by the first processor, the switching request message is sent to the second processor by the first processor. In response to the switching request message, the switching permission message is sent to the first processor by the second processor. In the embodiments of the present disclosure, in response to the switching permission message, the first processor enters the screen-off state according to the switching indication information, thereby realizing the screen-off process under the screen-on state.

In some embodiments, after the switching indication information is generated by the first processor, the screen-off process and the process of switching between the first processor and the second processor are implemented through different interfaces. On the one hand, the first processor negotiates with the second processor for switching, and on the other hand, the first processor performs the screen-off process of the first processor, thereby saving switching time.

In the embodiments of the present disclosure, the first processor sends the switching request message to the second processor through a first interface, it is necessary to seek the consent of the second processor, thereby facilitating the second processor to commence preparatory work for taking over the screen control authority. After receiving the switching request message, the second processor determines to prepare to take over the screen control authority from the first processor, and sends the switching permission message to the first processor. When the second processor agrees to perform switching, in response to the switching permission message, the first processor enters the screen-off state through a second interface according to the switching indication information, thereby realizing the screen-off process under the screen-on state.

In some embodiments of the present disclosure, sending and reception of messages between the first processor (i.e., a first core) and the second processor (i.e., a second core) may be completed through a separate dual-core communication channel.

In some embodiments of the present disclosure, the switching request message represents information inquiring/asking whether the second processor may perform the switching, indication information instructing the second processor to switch under the screen-on state (for example, the indication information is 1 representing screen-on switching, and the indication information is 0 representing screen-off switching, which is not limited herein), etc. In addition, according to the indication information or other parameters carried in the switching request message, the second processor may further instruct to directly continue displaying the second interface image on the screen during the subsequent switching process.

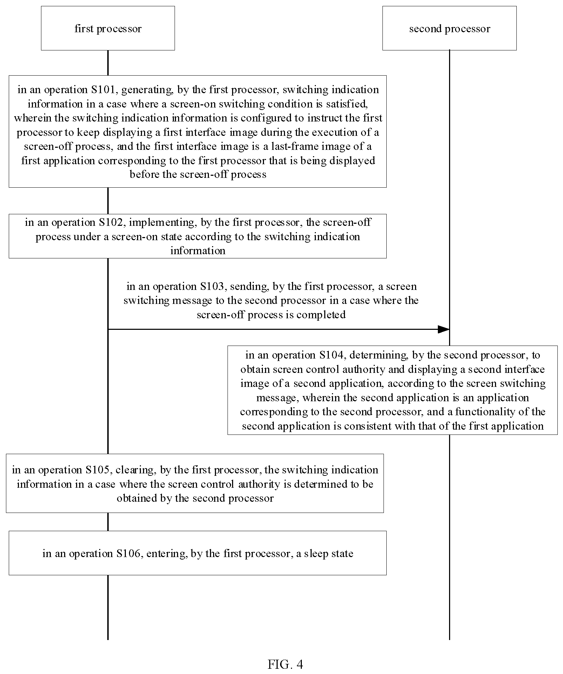

In some embodiments of the present disclosure, based on FIG. 1, as shown in FIG. 4, after the operation S104, i.e., the second processor determines to obtain the screen control authority according to the screen switching message, the switching method provided by the embodiments of the present disclosure may further include an operation S105 and an operation S106 described as follows.

In the operation S105, the switching indication information is cleared by the first processor in a case where the screen control authority is determined to be obtained by the second processor.

In the operation S106, the first processor enters the sleep state.

The embodiments of the present disclosure do not limit the execution sequence of the operation S105 and the operation S106.

In the embodiments of the present disclosure, after implementing system switching and display switching, the switching indication information may be cleared by the first processor in a case where the screen control authority is determined to be obtained by the second processor. That is, the architecture layer of the system is restored to a previous setting mode, so as to ensure that the first processor may perform the normal screen-on process and the screen-off process when switching back to the first system, thereby ensuring compatibility with the normal screen-off process.

In some embodiments, after the screen control authority is determined to be obtained by the second processor, an execution sequence of an operation of clearing the switching indication information by the first processor and an operation of displaying the second interface image by the second processor is not limited in the embodiments of the present disclosure. For example, the first processor may clear the switching indication information first, and then the second processor may display the second interface image of the second application. Alternatively, the execution sequence of two operations may be reversed. Alternatively, the two operations may be performed simultaneously.

In some embodiments, after implementing system switching and display switching, the first processor has completed the screen-off process and enters the sleep state. When the first system is in the sleep state, the electronic device turns off most of the hardware modules in the first processor and transfers all relevant data of the first system to a sleep file in a read only memory (ROM), and then cuts off the power supply to the first processor. After the second system sends a wake-up message to the first system, the electronic device restores the power supply to the first processor, the first system directly reads the content of the sleep file on the hard disk into a random access memory (RAM), and the first system switches to a wake-up state.

In the embodiments of the present disclosure, the above-mentioned sleep state may be divided into a plurality of stages (such as stages S1 to S4), and a power-on state and a power-off state of the first processor in different stages of the sleep state may be different, which are not limited herein. For example, in the stage S1, the first processor keeps in the power-on state (computing tasks may not be performed), and in the stage S2 and beyond, the first processor is in the power-off state. The sleep state is defined by the first processor, and for different sleep states, the first processor may take different operations, which may be power-off or power-on, which is not limited herein.

It may be understood that after switching from the first system with high power consumption displaying the first interface image of the first application under the AOD state to the second system displaying the second interface image of the second application under the AOD state, the first system enters the sleep state. In this way, it may be possible to reduce an occurrence of high operating power consumption of the electronic device due to a case that the first processor keeps in a working state for an extended period when implementing the display function on the system with high power consumption. Therefore, power consumption of the electronic device may be reduced, and the battery life of the electronic device may be improved.

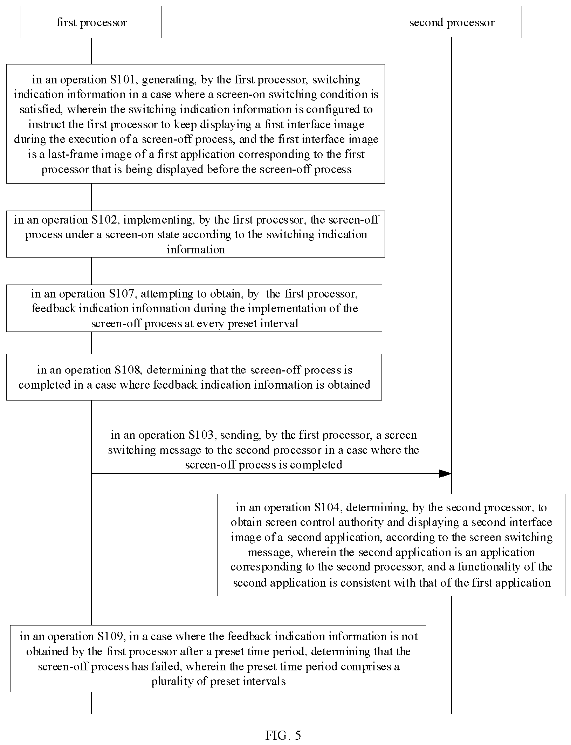

In some embodiments of the present disclosure, based on FIG. 1, as shown in FIG. 5, the switching method provided by the embodiments of the present disclosure further includes: an operation S107 to an operation S109. The operation S107 to the operation S108 may be performed between the operation S102 and the operation S103, and the operation S109 is performed after the operation S107, and is an alternative implementation for an optional branch of the operation S108, which may be described as follows.

In the operation S107, the first processor attempts to obtain feedback indication information during the implementation of the screen-off process at every preset interval.

In an operation S108, in a case where the feedback indication information is obtained, it is determined that the screen-off process is completed.

In the embodiments of the present disclosure, in a case where the feedback indication information is obtained by the first processor, it is determined that the screen-off process is completed. The feedback indication information is obtained through detection at the hardware driver layer at every preset interval during implementation of the screen-off process, and the feedback indication information is configured to represent that the screen-off process in the hardware driver layer has ended.

In some embodiments, after the first processor starts to implement the screen-off process, the first processor may attempt to obtain the feedback indication information during the implementation of the screen-off process at every preset interval. Based on the feedback indication information, it is determined whether the screen-off process is completed. The feedback indication information is generated only when the screen-off process is completed. Therefore, in a case where the feedback indication information is obtained by the first processor, it is determined that the screen-off process is completed. In this way, in a condition that the screen-off process is completed, the first processor sends a screen switching message to the second processor, so as to enable the switching of screen display control authority and content.

In the embodiments of the present disclosure, the first processor may read a state of a first system architecture layer at intervals to confirm whether the entire screen-off process is completed. In a case where the read state is the screen-off state, it means that the entire large-core system (which may include the framework layer, the Native layer, the HAL, the driver layer, and the kernel layer) completes the screen-off process, and the screen control authority may be switched/transferred to the second processor. After the first processor completes the screen-off process to the screen driver layer, a file node may be generated. It may be possible to determine whether the first processor enters the screen-off state by checking whether a feedback value or a flag bit (the feedback indication information) of the file node may be read. That is, the feedback indication information may be indication information generated after the first processor completes the screen-off process to the screen driver layer and representing that the screen-off is completed, or the screen state may be the screen-off state, which is not limited herein.

In some embodiments of the present disclosure, the preset interval may be 50ms, and may be set according to the actual situation, which is not limited herein.

It may be understood that the first processor may attempt to read at the preset interval to be informed of the completion state of the screen-off process as soon as possible, thereby improving the efficiency of system switching.

In the operation S109, in a case where the feedback indication information is not obtained by the first processor after a preset time period, determining that the screen-off process has failed. The preset time period includes a plurality of preset intervals.

In the embodiments of the present disclosure, the first processor cannot keep attempting to read the feedback indication information indefinitely. Therefore, a time limit within the preset time period is set. The preset time period includes the plurality of preset intervals. In a case where the feedback indication information is not read after the preset time period, it is determined that the execution of the screen-off is abnormal, the operation of switching the screen control authority cannot be performed, it is determined that the screen-off process has failed, and the first processor continues to run to realize the screen image display.

It may be understood that the first processor may be timely informed of the abnormal execution of the screen-off process through the time limit of the preset time period, the attempt of switching operation may be stopped timely, and the first processor may be used for the normal display. In this way, it may be possible to reduce delayed display of the image and the abnormity phenomenon caused by staying on a single frame for too long, thereby improving the ability to handle switching abnormity.

Taking the AOD scenario as an example, the exemplary application of the embodiments of the present disclosure in an actual application scenario may be described as below, and the method includes the following operations.

In an operation S201, in a case where the obtained screen state is the AOD state, and the first application matches the preset application list, it is determined that the screen-on switching condition is satisfied, and the switching indication information is generated by the first processor. The switching indication information includes the first switching indication information, the second switching indication information, and the third switching indication information.

In an operation S202, the switching request message is sent to the second processor by the first processor.

In an operation S203, in response to the switching request message, the switching permission message is sent to the first processor by the second processor.

In an operation S204, in response to the switching permission message, the screen-off state is entered, and during the screen-off process, the first processor instructs the framework layer to prohibit turning off the screen backlight according to the first switching indication information.

In the embodiments of the present disclosure, an operation of sending the switching request message to the second processor by the first processor may also be performed before an operation of generating the switching indication information. In response to the switching request message, the switching permission message is sent to the first processor by the second processor. In response to the switching permission message, the switching indication information is generated, the screen-off state is entered, and then the screen-off process is performed according to the switching indication information. The execution sequence of operations is not limited herein.

In an operation S205, according to the second switching indication information, the first processor instructs the hardware abstraction layer to prohibit transmitting a black-frame image to the screen, or the first processor instructs the hardware driver layer to intercept the hardware abstraction layer from transmitting a black-frame image to the screen.

In an operation S206, according to the third switching indication information, the first processor instructs the hardware driver layer to prohibit powering off the screen, and performs the screen-off process under the screen-on state.

In an operation S207, the first processor attempts to obtain the feedback indication information during the implementation of the screen-off process at every preset interval.

In an operation S208, in a case where the feedback indication information is obtained, it is determined that the screen-off process is completed.

In an operation S209, in a case where the screen-off process is completed, the screen switching message is sent to the second processor by the first processor.

In an operation S210, the second processor determines to obtain the screen control authority and displays a second interface image of the second application, according to the screen switching message. The second application is an application corresponding to the second processor, a functionality of the second application is consistent with that of the first application, and the first application and the second application have the AOD capability.

In the embodiments of the present disclosure, the operations S201 to S210 may be described in the foregoing embodiments with the operations of the same principle, which will not be repeated herein.

Exemplarily, taking the AOD scenario, in which the first system is the large-core system and the second system is the small-core system, as an example, the switching method provided by the embodiments of the present disclosure includes the following operations.

In an operation S1, the large-core system obtains that a current screen state is the AOD state, an AOD application currently displayed by the large-core system matches a preset application library of the small-core system, and the large-core system prepares to switch to the small-core system under the screen-on state.

In an operation S2, a switching request message is sent to the small-core system by the large-core system, and the small-core system is informed to prepare for screen-on switching.

In the embodiments of the present disclosure, in response to the switching request message, a switching permission message is sent to the large-core system by the small-core system. In response to the switching permission message, the large-core system exits the AOD state and enters the screen-off state. The small-core system prepares to supply power to the screen, and the large-core system prepares to perform the screen-off process.

In an operation S3, in a case where the large-core system informs the system framework layer to perform the screen-off process by generating the switching indication information, an instruction to set the backlight level of the screen to 0 is not issued.

In an operation S4, in a case where the large-core system informs the HAL to perform the screen-off process by generating the switching indication information, a pure black-frame is not transmitted to the screen.

In an operation S5, in a case where the large-core system informs the screen driver layer to perform the screen-off process by generating the switching indication information, the screen is not powered off.

In an operation S6, the large-core system performs the screen-off process, and the screen keeps the display of a last frame before the screen-off process.

In an operation S7, the large-core system cyclically reads a state of the screen driver layer.

In an operation S8, in a case where a state of the large-core system is read as the screen-off state within preset time, the large-core system switches the screen to the small-core system.

In an operation S9, the small-core system powers on the screen and continuously displays an AOD interface of the small-core on the screen.

In an operation S10, the large-core system restores set switching indication information.

In an operation S11, the large-core system enters the sleep state.

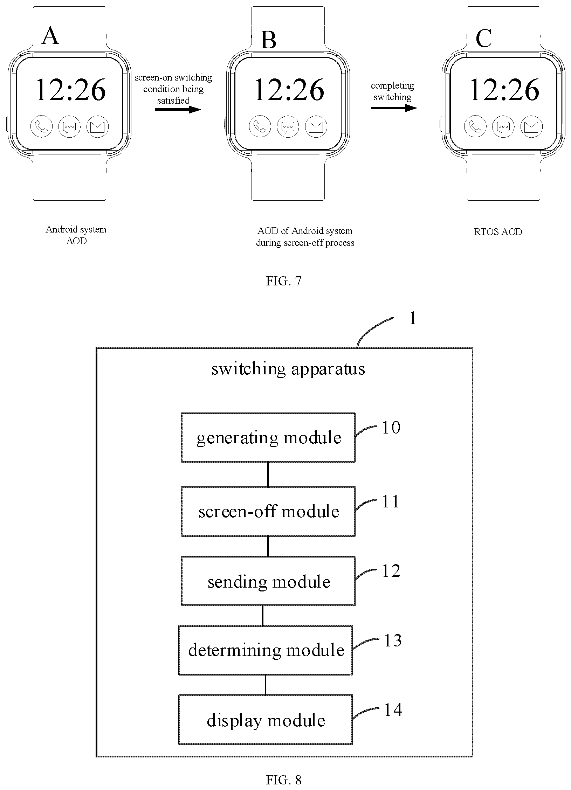

Exemplarily, as shown in FIG. 7, taking the electronic device being the smartwatch among the wearable device as an example, the smart watch is arranged with the Android system (run by the first processor) and the RTOS (run by the second processor). In a condition where both the first processor and the second processor are in the wake-up state, taking a case where both the first application and the second application are time APPs, and both the first interface screen and the second interface screen are time display interfaces as an example, the Android system, under the screen-on state, displays a time display interface A with different frames in the AOD mode. When a device state of the smart watch is satisfied with the screen-on switching condition, a first system software layer performs the screen-off process, keeps the hardware layer of the screen not to turn off and continuously display a time display interface B of a last frame before the screen-off process, and sends a switch to the RTOS to instruct the RTOS to switch and enter to the AOD state. In this way, the RTOS displays a time display interface C on the screen under the AOD state. At this time, the Android system enters the sleep state. The entire switching process is under the screen-on state, there is no black image, and the screen display is not reset or refreshed. The entire process is completely performed in the background, and the user side is unaware of the entire process.

It may be understood that when the first system is on standby in the AOD scenario, the first system software layer performs the screen-off process before the first system switches the screen to the second system, and keeps the hardware layer of the screen not to turn off and continuously display an image of the last frame before the screen-off process. In this way, it may be possible to seamlessly and imperceptibly switch to the AOD scenario of the second system, thereby saving power consumption and improving the battery life of the electronic device.

As shown in FIG. 8, the embodiments of the present disclosure provide a switching apparatus. The switching apparatus includes the following modules.

A generating module/portion 10 is configured to generate switching indication information through a first processor, in a case where a screen-on switching condition is satisfied. The switching indication information is configured to instruct the first processor to keep displaying a first interface image during the execution of a screen-off process. The first interface image is a last-frame image of a first application corresponding to the first processor that is being displayed before the screen-off process.

A screen-off module 11 is configured to implement the screen-off process under a screen-on state through the first processor, according to the switching indication information.

A sending module 12 is configured to send a screen switching message to a second processor through the first processor, in a case where the screen-off process is completed.

A determining module 13 is configured to determine to obtain screen control authority through the second processor, according to the screen switching message.

A display module 14 is configured to display a second interface image of a second application. The second application is an application corresponding to the second processor, and a functionality of the second application is consistent with that of the first application.

In some embodiments of the present disclosure, the generating module 10 is further configured to determine that the screen-on switching condition is satisfied in a case where an obtained screen state is an AOD state and the first application matches a preset application list, and generate the switching indication information through the first processor.

In some embodiments of the present disclosure, the generating module 10 is further configured to determine that the screen-on switching condition is satisfied in a case where an obtained screen state is a screen-on state, a startup instruction of the first application is received, and the first application matches a preset application list, and generate the switching indication information through the first processor in response to the startup instruction.

In some embodiments of the present disclosure, the preset application list represents a list of applications that are allowed to run on the second processor.

In some embodiments of the present disclosure, the generating module 10 is further configured to at least generate first switching indication information, second switching indication information, and third switching indication information through the first processor in a case where the screen-on switching condition is satisfied. The first switching indication information is configured to instruct to prohibit turning off a screen backlight during the screen-off process. The second switching indication information is configured to instruct to prohibit transmitting a black-frame image to a screen during the screen-off process. The third switching indication information is configured to instruct to prohibit powering off the screen during the screen-off process.

In some embodiments of the present disclosure, the generating module 10 is further configured to generate the first switching indication information, the second switching indication information, the third switching indication information, and fourth switching indication information through the first processor. The fourth switching indication information is configured to instruct to intercept an interface layer image transmitted by an application layer.

In some embodiments of the present disclosure, the switching indication information includes first switching indication information, second switching indication information, and third switching indication information. The screen-off module 11 is further configured to instruct a framework layer to prohibit turning off a screen backlight through the first processor during the screen-off process, according to the first switching indication information. The screen-off module 11 is further configured to instruct a HAL to prohibit transmitting a black-frame image to a screen through the first processor according to the second switching indication information, or the screen-off module 11 is further configured to instruct a hardware driver layer to intercept the HAL from transmitting a black-frame image to the screen. The screen-off module 11 is further configured to instruct the hardware driver layer to prohibit powering off the screen through the first processor according to the third switching indication information, and perform the screen-off process under the screen-on state.

In some embodiments of the present disclosure, the switching indication information further includes fourth switching indication information. The screen-off module 11 is further configured to instruct a system framework layer to intercept the interface layer image transmitted by the application layer through the first processor according to the fourth switching indication information, before the first processor instructs the framework layer to prohibit turning off the screen backlight during the screen-off process according to the first switching indication information.

In some embodiments of the present disclosure, the sending module 12 is further configured to send a switching request message to the second processor through the first processor before the switching indication information is generated by the first processor in a case where the screen-on switching condition is satisfied. The sending module 12 is further configured to send a switching permission message to the first processor through the second processor in response to the switching request message.

In some embodiments of the present disclosure, the screen-off module 11 is further configured to generate the switching indication information through the first processor in response to the switching request message.

In some embodiments of the present disclosure, the determining module 13 is further configured to determine that the screen-off process is completed in a case where feedback indication information is obtained by the first processor, before the first processor sends the screen switching message to the second processor in response to the completion of the screen-off process. The feedback indication information is obtained through the detection at the hardware driver layer at every preset interval during implementation of the screen-off process, and the feedback indication information is configured to represent that the screen-off process in the hardware driver layer has ended.

In some embodiments of the present disclosure, the determining module 13 is further configured to determine that the screen-off process has failed in a case where the feedback indication information is not obtained by the first processor after a preset time period. The preset time period includes a plurality of preset intervals.

In some embodiments of the present disclosure, the switching apparatus further includes: a clearing module 15. The clearing module 15 is configured to clear the switching indication information through the first processor in response to the switching request message.

In some embodiments of the present disclosure, the determining module 13 is further configured to power on the screen through the second processor in response to the screen switching message and determine to obtain screen control authority. The screen control authority is configured to allow the screen to display the second interface image corresponding to the second processor. The determining module 13 is further configured to obtain the second interface image of the second application through the second processor. The display module 14 is further configured to directly display the second interface image on the screen.

In some embodiments of the present disclosure, the determining module 13 is further configured to determine that the first processor enters a sleep state.

In some embodiments of the present disclosure, the operating power consumption of the first processor is higher than that of the second processor.

It may be understood that for the electronic device supporting the dual-core dual-system, in a case where a screen-on switching condition is satisfied, the electronic device generates switching indication information through a first processor, and keeps a first application, which is being run, displaying a first interface image during a screen-off process. In this way, it may be possible to achieve a switching to display a second application interface by a second application running on the second processor under a screen-off state, thereby completing a seamless switching of the device in the background. In a condition of ensuring a display function of the electronic device to normal operate, since power consumption of the first processor is higher than that of the second processor, when the second interface screen is displayed through the second processor, it may also be possible to reduce an occurrence of high operating power consumption of the electronic device due to a case that the first processor keeps in a working state for an extended period. Therefore, power consumption of the electronic device may be reduced, and the battery life of the electronic device may be improved.

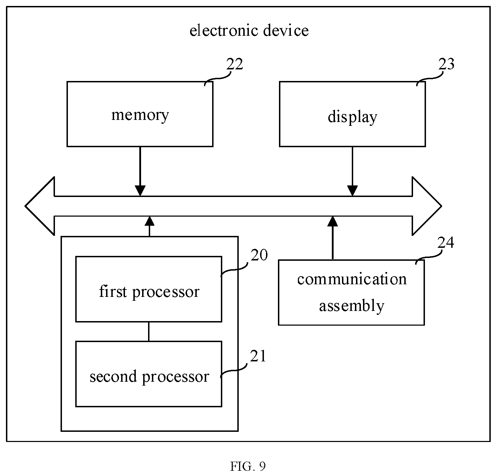

In some embodiments, in a practical application, as shown in FIG. 9, an electronic device may be further provided by some embodiments of the present disclosure. The electronic device includes: a first processor 20, a second processor 21, a memory 22, and a display 23. The memory 22 stores executable instructions. The memory 22, the display 23, and the processor 23 are connected through a communication bus 24. The first processor 20 and the second processor 21 are configured to execute the executable instructions stored in the memory to perform the aforementioned switching method. The display 23 is configured to perform screen display, such as displaying the first interface image or the second interface image.

The processor at least includes a first processor 20 and a second processor 21. The first processor 20 is configured to run the first system, and the second processor 21 is configured to run the second system. The first processor 20 has power consumption lower than the second processor 21, and the first processor 20 has a performance lower than the second processor 21. The processor is configured to connect to each part of the whole electronic device via various interfaces and lines, to execute various functions of the electronic device and process data by running or executing an instruction, a program, a code set, or an instruction set that are all stored in the memory 22 and invoking data stored in the memory 22. In some embodiments, the processor may be implemented by using at least one hardware form of a digital signal processing (DSP), a field-programmable gate array (FPGA), or a programmable logic array (PLA). The processor may integrate one or any combination of a CPU, a graphic processing unit (GPU), a neural-network processing unit (NPU), a modem, or the like. The CPU is mainly configured to process an operating system, a UI, an application program, or the like. The GPU is configured to render and draw content required to be displayed on the TP. The NPU is configured to realize an artificial intelligence (AI) function. The modem is configured to process wireless communication. It should be understood that the modem may also not be integrated into the processor and may be implemented via a chip separately.

The memory 22 may include the RAM or the ROM. Optionally, the memory 22 may include a non-transitory computer-readable storage medium. The memory 22 is configured to store an instruction, a program, a code, a code set, or an instruction set. The memory 22 may include a program storage area and a data storage area. The program storage area is configured to store instructions for implementing the operating system, instructions for implementing at least one function (such as a touch control function, a sound playing function, an image playing function, or the like), instructions for implementing the above embodiments, or the like. The data storage area is configured to store data (such as audio data, phonebooks, or the like) created according to the usage of the wearable device.

Some embodiments of the present disclosure provide a computer-readable storage medium storing executable instructions. In a case where the executable instructions are executed by a first processor and a second processor, the first processor and the second processor are caused to perform the aforementioned switching method.

Some embodiments of the present disclosure provide a computer program product, including a computer program or instructions. In a case where the computer program or the instructions are executed by a first processor and a second processor, the first processor and the second processor are caused to perform the switching method provided by some embodiments of the present disclosure.

In the embodiments of the present disclosure, the description of the above apparatus embodiments is similar to the description of the aforementioned method embodiments, and has similar beneficial effects as the method embodiments. For technical details not disclosed in the apparatus embodiments of the present disclosure, please refer to the description of the method embodiments of the present disclosure.

In some embodiments, the computer-readable storage medium may be a memory such as FRAM, ROM, PROM, EPROM, EEPROM, flash memory, magnetic surface memory, optical disk, or CD-ROM. The computer-readable storage medium may also be various devices including one or any combination of the aforementioned memories.

In some embodiments, the executable instructions may be in the form of programs, software, software modules, scripts, or codes, written in any programming language (including compiled or interpreted languages, or declarative or procedural languages), and may be deployed in any form, including being deployed as a standalone program or as a module, component, subroutine, or other module suitable for use in a computing environment.

As an example, the executable instructions may, but do not necessarily, correspond to files in a file system, and may be stored in a portion of a file that holds other programs or data, for example, in one or more scripts in a hypertext markup language (HTML) document, in a single file dedicated to the program in question, or in a plurality of coordinated files (for example, files that store one or more modules, subroutines, or portions of code).

The above is only the preferred embodiment of the present disclosure and is not intended to limit the scope of protection of the present disclosure. Any modifications, equivalent replacements, and improvements made within the spirit and scope of the present disclosure shall be included in the scope of protection of the present disclosure.

### INDUSTRIAL APPLICABILITY

The embodiments of the present disclosure provide a switching method, a switching apparatus, an electronic device, and a computer-readable storage medium. For the electronic device supporting the dual-core dual-system, in a case where a screen-on switching condition is satisfied, the electronic device generates switching indication information through a first processor, and keeps a first application, which is being run, displaying a first interface image during a screen-off process. In this way, it may be possible to achieve a switching to display a second application interface by a second application running on the second processor under a screen-off state, thereby completing a seamless switching of the device in the background. In a condition of ensuring a display function of the electronic device to normal operate, since power consumption of the first processor is higher than that of the second processor, when the second interface screen is displayed through the second processor, it may also be possible to reduce an occurrence of high operating power consumption of the electronic device due to a case that the first processor keeps in a working state for an extended period. Therefore, power consumption of the electronic device may be reduced, and the battery life of the electronic device may be improved.

## Claims

1. A switching method, applied to an electronic device, the electronic device at least comprising a first processor and a second processor, and the method comprising:
generating, by the first processor, switching indication information in a case where a screen-on switching condition is satisfied, wherein the switching indication information is configured to instruct the first processor to keep displaying a first interface image during the execution of a screen-off process, and the first interface image is a last-frame image of a first application corresponding to the first processor that is being displayed before the screen-off process;
implementing, by the first processor, the screen-off process under a screen-on state according to the switching indication information;
sending, by the first processor, a screen switching message to the second processor in a case where the screen-off process is completed; and
determining, by the second processor, to obtain screen control authority and displaying a second interface image of a second application, according to the screen switching message, wherein the second application is an application corresponding to the second processor, and a functionality of the second application is consistent with that of the first application.

2. The method according to claim 1, wherein generating, by the first processor, the switching indication information in a case where the screen-on switching condition is satisfied, comprises:
in a case where an obtained screen state is an always-on display state, and the first application matches a preset application list, determining that the screen-on switching condition is satisfied, and generating, by the first processor, the switching indication information.

3. The method according to claim 1, wherein generating, by the first processor, the switching indication information in a case where the screen-on switching condition is satisfied, comprises:
in a case where an obtained screen state is a screen-on state, a startup instruction of the first application is received, and the first application matches a preset application list, determining that the screen-on switching condition is satisfied, and generating, by the first processor, the switching indication information in response to the startup instruction.

4. The method according to claim 2 or 3, wherein the preset application list represents a list of applications that are allowed to run on the second processor.

5. The method according to claim 1, wherein generating, by the first processor, the switching indication information in a case where the screen-on switching condition is satisfied, comprises:
at least generating, by the first processor, first switching indication information, second switching indication information, and third switching indication information in a case where the screen-on switching condition is satisfied;
wherein the first switching indication information is configured to instruct to prohibit turning off a screen backlight during the screen-off process;
the second switching indication information is configured to instruct to prohibit transmitting a black-frame image to a screen during the screen-off process; and
the third switching indication information is configured to instruct to prohibit powering off the screen during the screen-off process.

6. The method according to claim 5, wherein generating, by the first processor, the at least first switching indication information, the second switching indication information, and the third switching indication information, comprises:
generating, by the first processor, the first switching indication information, the second switching indication information, the third switching indication information, and fourth switching indication information;
wherein the fourth switching indication information is configured to instruct to intercept an interface layer image transmitted by an application layer.

7. The method according to claim 1, 5, or 6, wherein the switching indication information comprises first switching indication information, second switching indication information, and third switching indication information;
implementing, by the first processor, the screen-off process under the screen-on state according to the switching indication information, comprises:
instructing, by the first processor, a framework layer to prohibit turning off a screen backlight during the screen-off process, according to the first switching indication information;
instructing, by the first processor, a hardware abstraction layer to prohibit transmitting a black-frame image to a screen according to the second switching indication information, or instructing, by the first processor, a hardware driver layer to intercept the hardware abstraction layer from transmitting a black-frame image to the screen; and
instructing, by the first processor, the hardware driver layer to prohibit powering off the screen according to the third switching indication information, and performing the screen-off process under the screen-on state.

8. The method according to claim 7, wherein the switching indication information further comprises fourth switching indication information;
before instructing, by the first processor, the framework layer to prohibit turning off the screen backlight during the screen-off process, according to the first switching indication information, the method further comprises:
instructing, by the first processor, a system framework layer to intercept the interface layer image transmitted by the application layer according to the fourth switching indication information.

9. The method according to any one of claims 1-3, 5 and 6, wherein before generating, by the first processor, the switching indication information in a case where the screen-on switching condition is satisfied, the method further comprises:
sending, by the first processor, a switching request message to the second processor; and
sending, by the second processor, a switching permission message to the first processor in response to the switching request message;
wherein generating, by the first processor, the switching indication information, comprises:
generating, by the first processor, the switching indication information in response to the switching request message.

10. The method according to any one of claims 1-3, 5 and 6, wherein before sending, by the first processor, the screen switching message to the second processor in a case where the screen-off process is completed, the method further comprises:
determining that the screen-off process is completed in a case where feedback indication information is obtained by the first processor, wherein the feedback indication information is obtained through the detection at the hardware driver layer at every preset interval during implementation of the screen-off process, and the feedback indication information is configured to represent that the screen-off process in the hardware driver layer has ended.

11. The method according to any one of claims 1-3, 5 and 6, wherein the method further comprises:
clearing, by the first processor, the switching indication information in a case where the screen control authority is determined to be obtained by the second processor.

12. The method according to any one of claims 1-3, 5 and 6, wherein determining, by the second processor, to obtain the screen control authority and displaying the second interface image of the second application, according to the screen switching message, comprises:
in response to the screen switching message, powering on, by the second processor, the screen, and determining, by the second processor, to obtain the screen control authority, wherein the screen control authority is configured to allow the screen to display the second interface image corresponding to the second processor;
obtaining, by the second processor, the second interface image of the second application; and
directly displaying the second interface image on the screen.

13. The method according to claim 1, wherein the method further comprises:
entering, by the first processor, a sleep state.

14. The method according to claim 10, wherein the method further comprises:
in a case where the feedback indication information is not obtained by the first processor after a preset time period, determining that the screen-off process has failed, wherein the preset time period comprises a plurality of preset intervals.

15. The method according to claim 1, wherein operating power consumption of the first processor is higher than that of the second processor.

16. A switching apparatus, comprising:
a generating module, configured to generate switching indication information through a first processor, in a case where a screen-on switching condition is satisfied, wherein the switching indication information is configured to instruct the first processor to keep displaying a first interface image during the execution of a screen-off process, and the first interface image is a last-frame image of a first application corresponding to the first processor that is being displayed before the screen-off process;
a screen-off module, configured to implement the screen-off process under a screen-on state through the first processor, according to the switching indication information;
a sending module, configured to send a screen switching message to a second processor through the first processor, in a case where the screen-off process is completed;
a determining module, configured to determine to obtain screen control authority through the second processor, according to the screen switching message; and
a display module, configured to display a second interface image of a second application, wherein the second application is an application corresponding to the second processor, and a functionality of the second application is consistent with that of the first application.

17. The apparatus according to claim 16, wherein the generating module is further configured to at least generate first switching indication information, second switching indication information, and third switching indication information through the first processor, in a case where the screen-on switching condition is satisfied;
wherein the first switching indication information is configured to instruct to prohibit turning off a screen backlight during the screen-off process;
the second switching indication information is configured to instruct to prohibit transmitting a black-frame image to a screen during the screen-off process; and
the third switching indication information is configured to instruct to prohibit powering off the screen during the screen-off process.

18. The apparatus according to claim 17, wherein the generating module is further configured to generate the first switching indication information, the second switching indication information, the third switching indication information, and fourth switching indication information through the first processor;
wherein the fourth switching indication information is configured to instruct to intercept an interface layer image transmitted by an application layer.

19. An electronic device, comprising:
a first processor, a second processor, a memory, and a display;
wherein the memory stores executable instructions;
the first processor and the second processor are configured to execute the executable instructions stored in the memory to perform the method according to any one of claims 1 to 15; and
the display is configured to perform screen display.

20. A computer-readable storage medium storing executable instructions, wherein in a case where the executable instructions are executed by a first processor and a second processor, the first processor and the second processor are caused to perform the method according to any one of claims 1 to 15.
